# EUROPÄISCHE PATENTSCHRIFT

(11) **EP 2 697 018 B1**
(45) Veröffentlichungstag und Bekanntmachung des Hinweises auf die Patenterteilung: **22.07.2020**
(21) Anmeldenummer: 12715669.3
(22) Anmeldetag: 12.04.2012
(51) Int. Cl.: B24B 39/00, B23P 15/02, B23P 15/00, B23P 9/02, C21D 8/00

(54) **WERKZEUGMASCHINE MIT WALZWERKZEUGVORRICHTUNG ZUM FESTWALZEN VON INSBESONDERE SCHAUFELELEMENTEN EINES ROTORBEREICHES EINES STRAHLTRIEBWERKES**
MACHINE TOOL WITH BURNISHING TOOL DEVICE FOR BURNISHING ESPECIALLY BLADE ELEMENTS OF A ROTOR PORTION OF A JET ENGINE
MACHINE OUTIL AVEC DISPOSITIF DE LAMINAGE POUR LAMINER EN PARTICULIER D'ÉLÉMENTS AUBES D'UNE PARTIE DE ROTOR D'UN MOTEUR À RÉACTION

(30) Priorität: 12.04.2011 DE 102011007223
(43) Veröffentlichungstag der Anmeldung: 19.02.2014
(73) Patentinhaber: Rolls-Royce Deutschland Ltd & Co KG, 15827 Blankenfelde-Mahlow (DE)
(72) Erfinder: FELDMANN, Goetz, G.,Dr., 15827 Blankenfelde-Mahlow (DE); RÖTTGER, Karsten, 15827 Blankenfelde-Mahlow (DE); ZENK, Stefan, 15827 Blankenfelde-Mahlow (DE)
(86) Internationale Anmeldenummer: PCT/EP2012/056614
(87) Internationale Veröffentlichungsnummer: WO 2012/140104

(56) Entgegenhaltungen:
- WO-A2-2007/055864
- US-A1- 2007 234 772

## Beschreibung

Die Erfindung betrifft eine Werkzeugmaschine mit einer Walzwerkzeugvorrichtung gemäß der im Oberbegriff des Patentanspruches 1 näher definierten Art.

Aus der Praxis bekannte Walzwerkzeugvorrichtungen zum Festwalzen von insbesondere Schaufelelementen eines Rotorbereiches eines Strahltriebwerkes sind üblicherweise mit einem Werkzeugträger ausgeführt, der mit einer Trägerspindel verbindbar ist und mit dem zwei Zangenkörper wiederum drehbar verbunden sind. Die Zangenkörper sind jeweils mit einem Wälzbereich ausgeführt, wobei ein Abstand zwischen den Wälzbereichen in Abhängigkeit einer Drehbewegung der Zangenkörper gegenüber dem Werkzeugträger variierbar ist. Mittels derartiger Walzwerkzeugvorrichtungen bzw. mit solchen Zangenwerkzeugen besteht die Möglichkeit, Schaufelelemente bzw. dünnwandige Bauteile gleichzeitig von beiden Seiten des dünnwandigen Bauteiles zu bearbeiten und dabei glatt- bzw. festzuwalzen.

Schaufelelemente werden über die Walzwerkzeugvorrichtungen durch einen axialen Eingriff ausgehend von der Schaufelvorderkante über eine in Strömungsrichtung liegende Bearbeitung über Festwalzen nachverfestigt, um eine Beständigkeit der Schaufelelemente gegenüber Fremdkörperschädigungen und auch Schwingungsbelastungen zu erhöhen.

Die aus der Praxis bekannten Walzwerkzeugvorrichtungen weisen jedoch den Nachteil auf, dass eine Achse der Trägerspindel in mit dem Werkzeugträger verbundenem Zustand einen Achsversatz zu einer durch einen Berührungspunkt zwischen den Wälzbereichen und dem zu bearbeitenden Bauteil, wie einem Schaufelelement, aufweist, wodurch insbesondere eine CAD-CAM-Programmierung und eine spätere Implementierung der Fertigungsprogramme mittels eines Postprozessors auf ein Mehrachsbearbeitungszentrum sehr aufwendig sind und daher Fertigungskosten in unerwünschtem Umfang erhöhen. Die aus dem Achsversatz zwischen der Spindelträgerachse und der durch den Berührungspunkt zwischen den Wälzbereichen und dem zu bearbeitenden Bauteil gelegten Berührungsachse resultierende Komplexität ergibt sich aus der Tatsache, dass bei einem Verschwenken der Walzwerkzeugvorrichtung durch die Trägerspindel während der Bearbeitung von Freiformflächen eines Werkstückes sich die Lage des Berührungspunktes gegenüber der Spindelträgerachse permanent ändert, was bei der Programmierung des Fertigungsablaufes durch entsprechende Anpassung der sich ständig ändernden Vektoren zu berücksichtigen ist.

Aus der Druckschrift US 2007/0234772 A1 ist ein Oberflächenbearbeitungsapparat bekannt, welcher zwei jeweils mit einem Oberflächenbearbeitungselement ausgeführte Arme aufweist. Über die Oberflächenbearbeitungselemente können Druckeigenspannungen in eine Oberfläche von einem Werkstück eingebracht werden. Die Arme sind an einer Basis im Bereich eines Drehpunkts miteinander verbunden, wobei die Basis wiederum an einer Positioniereinrichtung anordenbar ist. Von einem Aktuator ist eine die Arme verbindende Verbindung betätigbar, so dass ein erster Arm und ein zweiter Arm relativ zueinander bewegbar sind.

Der vorliegenden Erfindung liegt daher die Aufgabe zugrunde, eine Werkzeugmaschine mit einer Walzwerkzeugvorrichtung zur Verfügung zu stellen, mittels welcher eine Programmierung und spätere Implementierung von Fertigungsprogrammen in Mehrachsbearbeitungszentren mit möglichst geringem Aufwand durchführbar ist.

Erfindungsgemäß wird diese Aufgabe mit einer Werkzeugmaschine mit einer Walzwerkzeugvorrichtung mit den Merkmalen des Patentanspruches 1 gelöst.

Die erfindungsgemäße Werkzeugmaschine zum Festwalzen von insbesondere Schaufelelementen eines Rotorbereiches eines Strahltriebwerkes weist einen Werkzeugträger auf, der mit einer Trägerspindel verbindbar ist und mit dem zwei Zangenkörper drehbar verbunden sind. Die Zangenkörper sind jeweils mit einem Wälzbereich ausgeführt und ein Abstand zwischen den Walzbereichen ist in Abhängigkeit einer Drehbewegung der Zangenkörper variierbar.

Um eine Programmierung und eine spätere Implementierung der Fertigungsprogramme in Mehrachsbearbeitungszentren im Vergleich zu aus der Praxis bekannten Walzwerkzeugvorrichtungen zu vereinfachen, verläuft eine Achse der Trägerspindel bei der erfindungsgemäßen Walzwerkzeugvorrichtung in mit dem Werkzeugträger verbundenem Zustand zwischen den Wälzbereichen durch einen bei einem Abstand zwischen den Wälzbereichen gleich Null vorliegenden Berührungspunkt zwischen den Wälzbereichen hindurch, womit die Achse der Trägerspindel und eine Berührungslinie zwischen der Walzwerkzeugvorrichtung und einem zu bearbeitenden Bauteil im Wesentlichen deckungsgleich sind. Damit sind insbesondere während der Bearbeitung von Freiformflächen eines Werkstückes keine wechselnden Lageveränderungen und daraus resultierende sich ständig ändernde Vektoren bei der Programmierung des Fertigungsverlaufes zu berücksichtigen.

Erfindungsgemäß sind die Zangenkörper um ein gemeinsames Drehlager gegenüber dem Werkzeugträger verdrehbar ausgeführt, wobei ein Abstand zwischen den Wälzbereichen während einer gemeinsamen Drehbewegung der Zangenkörper um das gemeinsame Drehlager gleich bleibt. Damit ist gewährleistet, dass bei Anlage der Wälzbereiche an einem vorzugsweise dünnwandigen Bauteil, wie einem Schaufelelement eines Rotorbereiches eines Strahltriebwerkes, eine durch die Anlage der Wälzbereiche bedingte Verformung des zu bearbeitenden Bauteiles vermieden wird. Zusätzlich sind durch die gemeinsame Verdrehbarkeit der Zangenkörper und damit auch der Wälzbereiche Oberflächenbereiche einer Freiflächenform für die Wälzbereiche anfahrbar, die ohne die gemeinsame Drehbarkeit der Zangenkörper nicht erreichbar wären.

Stehen die Zangenkörper über Kolbenelemente mit dem Werkzeugträger in Wirkverbindung, mittels welchen die Zangenkörper gegenüber dem Werkzeugträger um das Drehlager in eine in Bezug auf den Werkzeugträger definierte Nulllage verdrehbar sind, ist die Walzwerkzeugvorrichtung mit geringem Steuer- und Regelaufwand betreibbar, da die Nulllage der Zangenkörper in Bezug auf den Werkzeugträger jeweils automatisiert eingelegt wird.

Bei einer ebenfalls mit geringem Steuer- und Regelaufwand betreibbaren Ausführungsform der erfindungsgemäßen Walzwerkzeugvorrichtung sind die Zangenkörper über eine Antriebseinrichtung miteinander gekoppelt und der Abstand zwischen den Wälzbereichen ist in Abhängigkeit einer antriebseinrichtungsseitigen Drehbewegung der Zangenkörper zueinander reduzierbar.

Bei einer konstruktiv einfachen und kostengünstigen Ausführungsform der erfindungsgemäßen Walzwerkzeugvorrichtung ist die Antriebseinrichtung als eine einfach wirkende Kolben-Zylinder-Einheit ausgebildet.

Ist ein Abstand zwischen den Wälzbereichen über die Antriebseinrichtung bis auf einen definierten Grenzwert reduzierbar, ist auf einfache Art und Weise gewährleistet, dass sich die Wälzbereiche selbst bei Erreichen eines maximalen Verfahrweges nicht berühren und Beschädigungen der Walzwerkzeugvorrichtung auf einfache Art und Weise vermieden sind.

Ist den Zangenkörpern eine Rückstelleinrichtung zugeordnet, über die ein Abstand zwischen den Wälzbereichen durch rückstellungseinrichtungsseitiges Drehen der Zangenkörper zueinander in Richtung eines maximalen Wertes veränderbar ist, ist der Eingriff zwischen den Wälzbereichen der Walzwerkzeugvorrichtung und dem jeweils zu bearbeitenden Bauteil in gewünschtem Umfang aufhebbar.

Sind die Wälzbereiche mit den Zangenkörpern über Adapterelemente verbindbar, sind über die Walzwerkzeugvorrichtung vorzugsweise verschiedene radiale Eingriffstiefen durch unterschiedlich ausgeführte Adapterelemente und auch verschieden hohe Wälzkräfte für das jeweils zu bearbeitende Bauteil mit geringem konstruktiven Aufwand auf kostengünstige Art und Weise darstellbar.

Umfassen die Wälzbereiche jeweils ein Kugelelement, liegt zwischen den Wälzbereichen und dem jeweils zu bearbeitenden Bauteil jeweils eine Punktberührung vor, über die bei vergleichsweise geringen Kräften eine hohe Flächenpressung erzwingbar und damit eine hohe Eigenspannung in oberflächennahe Bereiche des zu bearbeitenden Bauteiles bei gleichzeitig hoher Oberflächengüte einbringbar sind.

Weitere Vorteile und vorteilhafte Ausführungsformen des erfindungsgemäßen Gegenstandes ergeben sich aus den Patentansprüchen und dem nachfolgend unter Bezugnahme auf Zeichnung prinzipmäßig beschriebenen Ausführungsbeispiel.

Es zeigt:
- Fig. 1: eine stark schematisierte Längsschnittansicht eines Strahltriebwerks, das mit einem einstückigen Rotorbereich ausgeführt ist;
- Fig. 2: eine vergrößerte Einzeldarstellung eines Schaufelelementes des einstückigen Rotorbereiches gemäß Fig. 1;
- Fig. 3: eine Seitenansicht einer Walzwerkzeugvorrichtung; und
- Fig. 4: die Walzwerkzeugvorrichtung gemäß Fig. 3 in einer in Fig. 3 näher gekennzeichneten Ansicht IV.

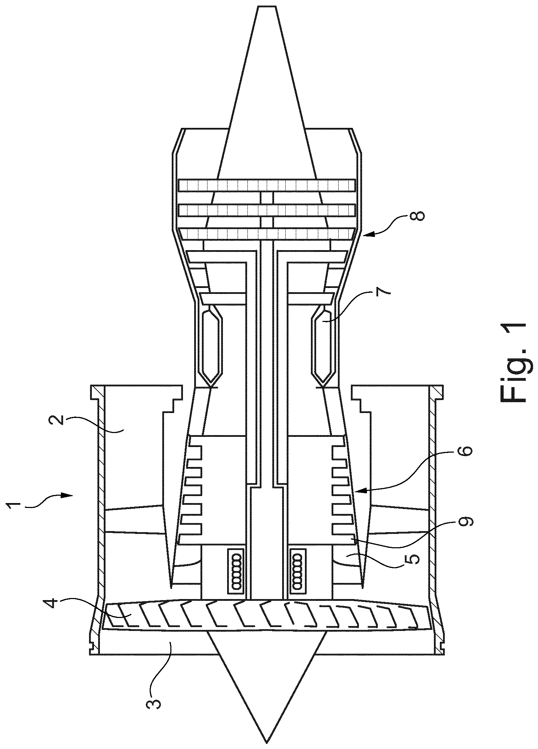

Fig. 1 zeigt eine Längsschnittansicht eines Strahltriebwerkes 1, das mit einem Nebenstromkanal 2 ausgeführt ist. Des Weiteren ist das Strahltriebwerk 1 mit einem Einlaufbereich 3 ausgebildet, an den sich stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

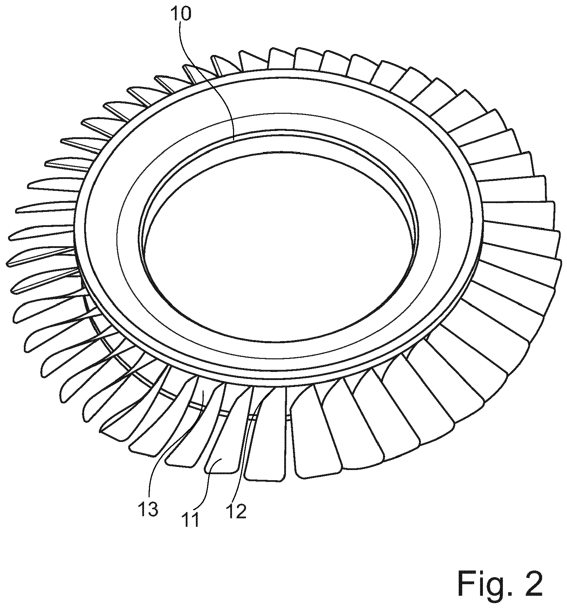

In Fig. 2 ist eine vergrößerte Einzelansicht eines einstückigen Rotorbereiches 9 der Verdichtereinrichtung 6 dargestellt, der einen ringförmigen Grundkörper 10 und mehrere über den Umfang verteilte Schaufelelemente 11 umfasst, die sich im Wesentlichen vom Grundkörper 10 radial erstrecken.

Der einstückige Rotorbereich 9 stellt ein so genanntes Blisk dar, das eine integral beschaufelte Rotor-Konstruktion ist. Der Begriff Blisk setzt sich aus den englischen Worten "Blade" für Schaufel und "Disk" für Scheibe zusammen. Die Scheibe bzw. der ringförmige Grundkörper 10 sowie die Schaufelelemente 11 sind aus einem Stück gefertigt, womit bei mehrstückig ausgeführten Rotorbereichen vorgesehene Schaufelfüße und Scheibennuten entfallen. Der einstückige Rotorbereich 9 ist gegenüber konventionell beschaufelten Verdichterrotoren durch eine erheblich geringere Teilezahl gekennzeichnet und die Scheibenform des ringförmigen Grundkörpers 10 ist für eine geringere Randlast ausgelegt. Dies führt dazu, dass das Gewicht des einstückigen Rotorbereiches 9 in Verbindung mit dem Einsatz leichter Werkstoffe um bis zu 50 % gegenüber herkömmlichen Rotorbereichen reduziert ist. Die Höhe der Gewichtsreduzierung ist dabei jeweils abhängig von der Geometrie der Verdichtereinrichtung 6.

Ein weiterer positiver Effekt ist, dass die Schaufelelemente 11 des integral beschaufelten Rotorbereiches 9 mit geringerem Abstand zueinander anordenbar sind, wodurch eine maximal mögliche Verdichtung und der Wirkungsgrad verbesserbar ist.

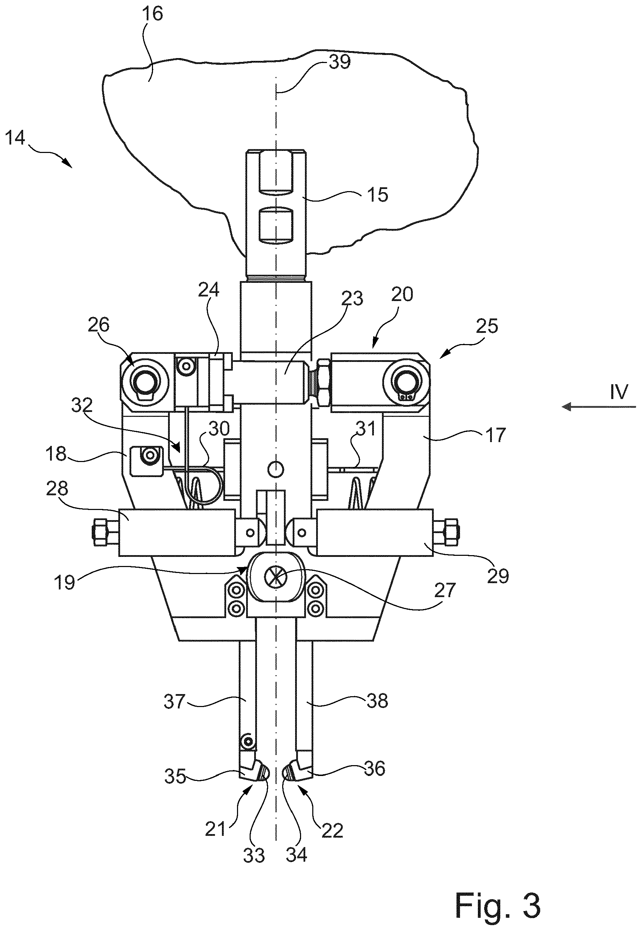

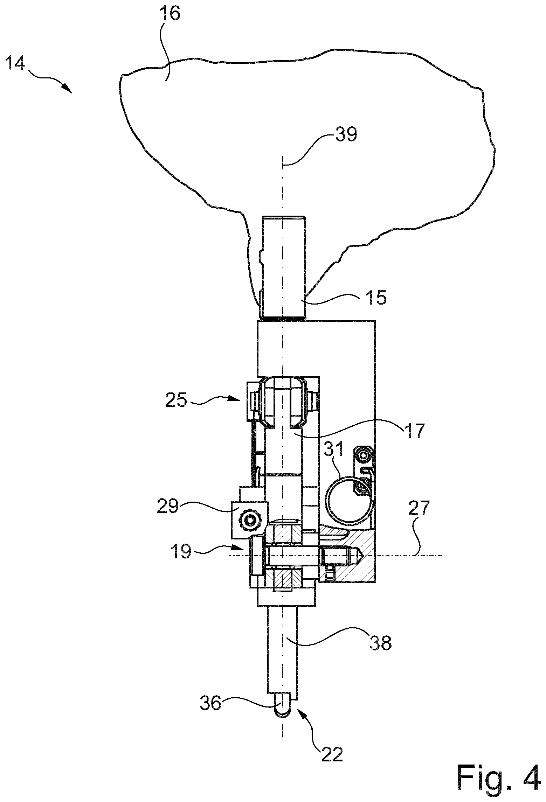

Um die Verdichtereinrichtung 6 bzw. den einstückigen Rotorbereich 9 gegenüber Fremdkörperschäden und auch Schwingungsbelastungen bei gleichzeitig geringem Eigengewicht auszuführen, werden in die Schaufelelemente 11 über eine jeweils radial zwischen die Schaufelelemente 11 eingreifende und in Fig. 3 und Fig. 4 näher gezeigte Walzwerkzeugvorrichtung 14 bzw. ein Walzwerkzeug durch Festwalzen in oberflächennahen Bereichen Eigenspannungen eingebracht, wobei jeweils die gesamte Oberfläche eines jeden Schaufelelementes 11 festgewalzt wird. Zusätzlich werden auch Übergangsbereiche 12 bzw. Fillets zwischen den Oberflächen der Schaufelelemente 11 und einer Oberfläche 13 des Grundkörpers 10 zwischen den Schaufelelementen 11 mittels eines so genannten und in der Zeichnung nicht näher dargestellten Einfingerwalzwerkzeuges festgewalzt.

Des Weiteren wird auch die Oberfläche 13 bzw. der Annulus des Grundkörpers 10 zwischen den Schaufelelementen 11 bevorzugt mittels eines Einzelfingerwalzwerkzeuges festgewalzt.

Über das Festwalzen der Oberflächen der Längsseiten und der Kanten der Schaufelelemente 11, der Übergangsbereiche 12 und der Oberfläche 13 des Grundkörpers 10 werden jeweils oberflächennahe Bereiche des einstückigen Rotorbereiches 9 durch Erhöhen der Versetzungsdichte verfestigt und die Randschicht des Rotorbereiches 9 gehärtet. Die Härtung der Randschicht verringert das Risiko von Anrissen, die aus einer Fremdkörperschädigung sowie aus Schwingungsbelastungen resultieren. Darüber hinaus führen die ins Material durch das Festwalzen eingebrachten Druckeigenspannungen im Bereich des Rotorbereiches 9 dazu, dass diese nach Bildung eines Risses einem Rissfortschritt entgegenwirken und somit einen positiven Effekt hinsichtlich der Dauerschwingfestigkeit und damit bezüglich der Lebensdauer des Strahltriebwerkes 1 haben.

Des Weiteren weist der einstückige Rotorbereich 9 durch den Festwalzprozess eine hohe Oberflächengüte mit einer geringen Oberflächenrauheit auf, die einen positiven Effekt auf die aerodynamische Güte der Schaufelelemente 11 sowie des gesamten Rotorbereiches 9 ohne das Erfordernis eines weiteren sich an den Verfestigungsprozess anschließenden Prozessschrittes zur Glättung der Oberfläche hat.

In Fig. 3 und Fig. 4 ist jeweils eine Seitenansicht eines erfindungsgemäßen Walzwerkzeuges 14 zum Festwalzen der Längsseiten bzw. der gesamten Oberfläche der Schaufelelemente 11 des Rotorbereiches 9 gezeigt. Das Walzwerkzeug 14 umfasst einen Werkzeugträger 15, der mit einer Trägerspindel 16 Z der erfinungsgemäßen Werkzeugmaschine in dargestelltem Umfang verbindbar ist. Mit dem Werkzeugträger 15 sind zwei Zangenkörper 17, 18 des Walzwerkzeuges 14 im Bereich eines Drehlagers 19 drehbar verbunden, wobei die Zangenkörper 17, 18 über eine vorliegend als einfach wirkende Kolben-Zylinder-Einheit ausgeführte Antriebseinrichtung 20 gekoppelt sind und ein Abstand zwischen Wälzbereichen 21, 22 in Abhängigkeit einer antriebseinrichtungsseitigen Drehbewegung der Zangenkörper 17 und 18 um das Drehlager 19 reduziert wird. Hierfür wird die Antriebseinrichtung 20 mit Hydraulikdruck beaufschlagt und ein Kolbenelement 23 aufgrund des anliegenden Hydraulikdrucks aus einem Zylinderelement 24 der Antriebseinrichtung 20 heraus verfahren, wobei bei einer solchen Betriebszustandsänderung der Antriebseinrichtung 20 ein Abstand zwischen den den Wälzbereichen 21 und 22 abgewandten Enden 25 und 26 der Zangenkörper 17 und 18 vergrößert wird, während der Abstand zwischen den Wälzbereichen 21 und 22 entsprechend den geometrischen Gegebenheiten in Abhängigkeit der Drehbewegung der Zangenkörper 17 und 18 um das Drehlager 19 herum verringert wird. Die Zangenkörper 17 und 18 sind im Bereich ihrer Enden 25 und 26 jeweils drehbar mit der Antriebseinrichtung 20 verbunden.

Zusätzlich sind die beiden Zangenkörper 17 und 18 um das Drehlager 19 herum um eine in Bezug auf die Zeichenebene in Hochrichtung ausgerichtete Drehachse 27 zusätzlich drehbar am Werkzeugträger 15 befestigt, um bei Anlage der Wälzbereiche 21 und 22 an einem Schaufelelement 11 die Zangenkörper 17 und 18 verschwenken zu können und eine durch die Anlage der Wälzbereiche 21 und 22 am Schaufelelement bedingte Verformung der Schaufelelemente 11 jeweils zu vermeiden. Während der gemeinsamen Verdrehung der Zangenkörper 17 und 18 um das Drehlager 19 gegenüber dem Werkzeugträger 15 bleibt ein Abstand zwischen den Wälzbereichen 21 und 22 gleich. Des Weiteren ist durch die gemeinsame Verdrehbarkeit der beiden Zangenkörper 17 und 18 um das Drehlager 19 auch gewährleistet, dass die jeweils ein Schaufelprofil aufweisenden Schaufelelemente 11 über ihre gesamte Oberfläche mittels des Walzwerkzeuges 14 festwalzbar sind.

Die Zangenkörper 17 und 18 stehen über Kolbenelemente 28 und 29 mit dem Werkzeugträger 15 in Wirkverbindung, wobei die Zangenkörper 17 und 18 von den Kolbenelementen 28 und 29 gegenüber dem Werkzeugträger 15 um das Drehlager 19 in eine in Bezug auf den Werkzeugträger 15 und in Fig. 3 dargestellte definierte Nulllage zurückgestellt werden, wenn eine die Zangenkörper 17 und 18 gemeinsam um das Drehlager 19 verdrehende Drehkraft im Wesentlichen gleich Null ist.

Des Weiteren ist den Zangenkörpern 17 und 18 eine vorliegend zwei Federeinrichtungen 30 und 31 umfassende Rückstelleinrichtung 32 zugeordnet, über die ein Abstand zwischen den Wälzbereichen 21 und 22 durch rückstelleinrichtungsseitiges Drehen der Zangenkörper 17 und 18 in Richtung eines maximalen Wertes veränderbar ist.

Die Wälzbereiche 21 und 22 umfassen vorliegend jeweils ein Kugelelement 33, 34, die jeweils in Haltebereichen aufgenommen sind und in an sich bekannter Art und Weise mit hydraulischem Druck beaufschlagbar sind, um die Schaufelelemente 11 mit der jeweils erforderlichen Wälzkraft über die Kugelelemente 33 und 34 beaufschlagen zu können.

Die Haltebereiche 35 und 36 sind vorliegend in mit den Zangenkörpern 17 und 18 fest über Verschraubungen verbundenen und wenigstens annähernd fingerartig ausgeführte Adapterelemente 37 und 38 eingeschoben und vorzugsweise über Madenschrauben mit diesen verschraubt.

Die Adapterelemente 37 und 38 sind jeweils wechselbar, womit über das Walzwerkzeug 14 unterschiedliche Eingriffstiefen in radialer Richtung zwischen den Schaufelelementen 11 realisierbar sind. Zusätzlich sind auch hinsichtlich der übertragbaren Druck- bzw. Wälzkraft ausgelegte Adapterelemente 37 und 38 mit den Zangenkörpern 17 und 18 verbindbar, wobei dünnere Adapterelemente in schmälere Bereiche zwischen den Schaufelelementen 11 einführbar sind. Dabei werden dünnere Schaufelelemente 11 mit schlankeren Adapterelementen 37 und 38 auch mit geringeren Walz- bzw. Druckkräften beaufschlagt, da die Adapterelemente 37 und 38 dann eine gewisse Elastizität aufweisen und die maximale Wälzkraft durch die Elastizität der Adapterelemente 37 und 38 begrenzt ist. Eine komplette Durchfestigung der Schaufelelemente ist während des Festwalzens durch Begrenzung der maximalen Walzkraft vermeidbar, da eine zu hohe Druckbeanspruchung während des Wälzvorganges im mittleren Bereich der Schaufelelemente 11 ein Zugspannungsmaximum erzeugt, welches eine Rissbildung von innen heraus bei Schwingungsbelastungen begünstigt. Dies ist jedoch aufgrund einer Verschlechterung einer Lebensdauer der Schaufelelemente 11 nicht erwünscht.

Die während des Festwalzens jeweils in den Rotorbereich eingebrachte Wälzkraft ist über eine in der Zeichnung nicht näher dargestellte Druckregelungseinheit in gewünschtem Umfang an jeder Stelle eines Schaufelelementes 11 und auch in den Übergangsbereichen 12 sowie der restlichen Oberfläche 13 des Grundkörpers 10 durch Regeln des an den Wälzbereichen 21, 22 anliegenden hydraulischen Drucks variierbar, um den Rotorbereich 9 im gewünschtem Umfang durch Erzeugen der an jeder Stelle des Rotorbereiches 9 nötigen optimalen Druckeigenspannungen verfestigen zu können und eine Verbesserung hinsichtlich der Haltbarkeit der Schaufeln zu erzielen.

Um beispielsweise eine einem Festwalzvorgang mittels des Walzwerkzeuges 14 vorgeschaltete CAD-CAM-Programmierung und eine spätere Implementierung der Fertigungsprogramme mittels eines Postprozessors auf ein Mehrachsbearbeitungszentrum zu vereinfachen, verläuft eine Achse 39 der Trägerspindel 16 in mit dem Werkzeugträger 15 verbundenem Betriebszustand zwischen den Wälzbereichen 21 und 22 durch einen bei einem Abstand zwischen den Wälzbereichen 21 und 22 gleich Null vorliegenden Berührungspunkt zwischen den Wälzbereichen 21 und 22 hindurch. Damit sind die Achse bzw. die Spindelträgerachse Z 39 und eine Achse durch den Berührungspunkt zwischen den Wälzbereichen 21 und 22 deckungsgleich, womit die Programmierung des Walzverfahrens wesentlich vereinfacht wird.

Um eine Beschädigung der zu bearbeitenden Schaufelelemente 11 und auch des Walzwerkzeuges 14 selbst zu vermeiden, ist ein Abstand zwischen den Wälzbereichen 21 und 22 über die Antriebseinrichtung 20 nur bis auf einen definierten Grenzwert reduzierbar. Die beiden Kugelelemente 33 und 34 sind durch entsprechendes Drehen bzw. Schwenken der Zangenkörper 17 und 18 und damit der Adapterelemente 37 und 38 nicht miteinander in Anlage bringbar, womit Beschädigungen des Walzwerkzeuges 14 auf einfache Art und Weise ausgeschlossen sind.

Mittels des Walzwerkzeuges 14 sind integral beschaufelte Scheiben und Rotoren von Strahltriebwerken mit geringen Kosten festwalzbar. Durch den schnellen und einfachen Austausch der Adapterelemente 37 und 38 ist das Walzwerkzeug 14 mit geringen Rüstzeiten für verschieden geometrisch ausgeführte Rotorbereiche einsetzbar, wobei neben unterschiedlichen Eingriffstiefen zwischen Schaufelelementen auch unterschiedliche Bearbeitungskräfte während des Walzprozesses an verschieden ausgeführten Bauteilen mit hoher Sicherheit und Prozessfähigkeit darstellbar sind.

Mittels der Zangenausführung des Walzwerkzeuges 14 ist eine Behandlung von Schaufelelementen bzw. von Aerofoils von einstückigen Rotorbereichen von Tip bis Fillet möglich, wobei ein gleichzeitiges Festwalzen der Druck- und Saugseiten von Schaufelelementen zur Vermeidung eines eigenspannungsbedingten Verzuges vorgesehen ist.

Zusätzlich ist mittels verschiedener Einzelwerkzeuge die Bearbeitung der Fillets bzw. der Übergangsbereiche zwischen der Oberfläche der Schaufelelemente und der Oberfläche des Grundkörpers zwischen den Schaufelelementen auf der Saug- und auf der Druckseite in gewünschtem Umfang durchführbar. Des Weiteren ist die Oberfläche des Grundkörpers zwischen den Schaufelelementen bzw. der Annulus mittels eines Einzelwerkzeuges festwalzbar.

Grundsätzlich ist das Walzwerkzeug 14 in jedes bekannte Bearbeitungszentrum integrierbar. Im Unterschied zu einer Nachverfestigung mittels Kugelstrahlen sind keine teuren Anlagen zu beschaffen. Die Nachverfestigung kann mittels des Walzwerkzeuges 14 beispielsweise in gängigen Fräszentren durchgeführt werden. Die Fräszentren werden mit dem Walzwerkzeug 14 bestückt und die Oberflächen von einstückigen Rotorbereichen werden analog zum Fräsen mit dem Festwalzwerkzeug 14 im Bereich ihrer Oberfläche bearbeitet.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: einstückiger Rotorbereich
- 10: ringförmiger Grundkörper
- 11: Schaufelelement
- 12: Übergangsbereich
- 13: Oberfläche des Grundkörpers
- 14: Walzwerkzeug
- 15: Werkzeugträger
- 16: Trägerspindel
- 17, 18: Zangenkörper
- 19: Drehlager
- 20: Antriebseinrichtung
- 21, 22: Wälzbereich
- 23: Kolbenelement
- 24: Zylinderelement
- 25: Ende des Zangenkörpers 17
- 26: Ende des Zangenkörpers 18
- 27: Drehachse
- 28, 29: Kolbenelement
- 30, 31: Federelement
- 32: Rückstelleinrichtung
- 33, 34: Kugelelement
- 35, 36: Haltebereich
- 37, 38: Adapterelement
- 39: Achse

## Patentansprüche

1. Werkzeugmaschine mit einer Trägerspindel (16) und einer Walzwerkzeugvorrichtung (14) zum Festwalzen von insbesondere Schaufelelementen (11) eines Rotorbereiches (9) eines Strahltriebwerkes (1) mit einem Werkzeugträger (15), der mit der Trägerspindel (16) verbindbar ist und mit dem zwei Zangenkörper (17, 18) drehbar verbunden sind, wobei die Zangenkörper (17, 18) jeweils mit einem Wälzbereich (21, 22) ausgeführt sind, und wobei ein Abstand zwischen den Wälzbereichen (21, 22) in Abhängigkeit einer Drehbewegung der Zangenkörper (17, 18) variierbar ist, wobei eine Achse (39) der Trägerspindel (16) in mit dem Werkzeugträger (15) verbundenem Zustand zwischen den Wälzbereichen (21, 22) durch einen bei einem Abstand zwischen den Wälzbereichen (21, 22) gleich Null vorliegenden Berührungspunkt zwischen den Wälzbereichen (21, 22) hindurch verläuft, wobei die Zangenkörper (17, 18) um ein gemeinsames Drehlager (19) gegenüber dem Werkzeugträger (15) verdrehbar ausgeführt sind, **dadurch gekennzeichnet, dass** ein Abstand zwischen den Wälzbereichen (21, 22) während einer gemeinsamen Drehbewegung der Zangenkörper (17, 18) um das gemeinsame Drehlager (19) gleich bleibt.

2. Werkzeugmaschine nach Anspruch 1, **dadurch gekennzeichnet, dass** die Zangenkörper (17, 18) über Kolbenelemente (28, 29) mit dem Werkzeugträger (15) in Wirkverbindung stehen, mittels welchen die Zangenkörper (17, 18) gegenüber dem Werkzeugträger (15) um das Drehlager (19) in eine in Bezug auf den Werkzeugträger (15) definierte Nulllage verdrehbar sind.

3. Werkzeugmaschine nach Anspruch 1 oder 2, **dadurch gekennzeichnet, dass** die Zangenkörper (17, 18) über eine Antriebseinrichtung (20) miteinander gekoppelt sind und der Abstand zwischen den Wälzbereichen (21, 22) in Abhängigkeit einer antriebseinrichtungsseitigen Drehbewegung der Zangenkörper (17, 18) zueinander reduzierbar ist.

4. Werkzeugmaschine nach Anspruch 3, **dadurch gekennzeichnet, dass** die Antriebseinrichtung (20) eine einfachwirkende Kolben-Zylinder-Einheit ist.

5. Werkzeugmaschine nach einem der Ansprüche 3 oder 4, **dadurch gekennzeichnet, dass** ein Abstand zwischen den Wälzbereichen (21, 22) über die Antriebseinrichtung (20) bis auf einen definierten Grenzwert reduzierbar ist.

6. Werkzeugmaschine nach einem der Ansprüche 1 bis 5, **dadurch gekennzeichnet, dass** den Zangenkörpern (17, 18) eine Rückstelleinrichtung (32) zugeordnet ist, über die ein Abstand zwischen den Wälzbereichen (21, 22) durch rückstelleinrichtungsseitiges Drehen der Zangenkörper (17, 18) zueinander in Richtung eines maximalen Wertes veränderbar ist.

7. Werkzeugmaschine nach einem der Ansprüche 1 bis 6, **dadurch gekennzeichnet, dass** die Wälzbereiche (21, 22) mit den Zangenkörpern (17, 18) über Adapterelemente (37, 38) verbindbar sind.

8. Werkzeugmaschine nach einem der Ansprüche 1 bis 7, **dadurch gekennzeichnet, dass** die Wälzbereiche (21, 22) jeweils ein Kugelelement (33, 34) umfassen.

## Claims

1. Machine tool having a carrier spindle (16) and a rolling-tool apparatus (14) for the deep rolling of in particular blade elements (11) of a rotor region (9) of a jet engine (1), having a tool carrier (15), which can be connected to the carrier spindle (16) and to which two pliers-type bodies (17, 18) are connected in a rotatable manner, wherein the pliers-type bodies (17, 18) are each formed with a rolling region (21, 22), and wherein it is possible to vary a distance between the rolling regions (21, 22) in dependence on a rotary movement of the pliers-type bodies (17, 18), wherein, when the carrier spindle (16) is connected to the tool carrier (15), an axis (39) of said carrier spindle runs between the rolling regions (21, 22), through a point of contact between the rolling regions (21, 22), said point of contact being present when the distance between the rolling regions (21, 22) is equal to zero, wherein the pliers-type bodies (17, 18) are designed such that they can be rotated in relation to the tool carrier (15) about a common rotary bearing (19), **characterized in that** a distance between the rolling regions (21, 22) remains constant while the pliers-type bodies (17, 18) rotate together about the common rotary bearing (19).

2. Machine tool according to Claim 1, **characterized in that** the pliers-type bodies (17, 18) are in operative connection with the tool carrier (15) via piston elements (28, 29), by means of which the pliers-type bodies (17, 18) can be rotated in relation to the tool carrier (15), about the rotary bearing (19), into a zero position as defined in relation to the tool carrier (15).

3. Machine tool according to Claim 1 or 2, **characterized in that** the pliers-type bodies (17, 18) are coupled to one another via a drive device (20) and the distance between the rolling regions (21, 22) can be reduced in dependence on the pliers-type bodies (17, 18) being rotated in relation to one another by the drive device.

4. Machine tool according to Claim 3, **characterized in that** the drive device (20) is a single-acting piston/cylinder unit.

5. Machine tool according to either of Claims 3 and 4, **characterized in that** the drive device (20) can reduce a distance between the rolling regions (21, 22) to a defined limit value.

6. Machine tool according to one of Claims 1 to 5, **characterized in that** the pliers-type bodies (17, 18) are assigned a restoring device (32), via which a distance between the rolling regions (21, 22) can be altered in the direction of a maximum value by the pliers-type bodies (17, 18) being rotated in relation to one another by the restoring device.

7. Machine tool according to one of Claims 1 to 6, **characterized in that** the rolling regions (21, 22) can be connected to the pliers-type bodies (17, 18) via adapter elements (37, 38).

8. Machine tool according to one of Claims 1 to 7, **characterized in that** the rolling regions (21, 22) each comprise a bowl element (33, 34).

## Revendications

1. Machine-outil comprenant une broche porteuse (16) et un dispositif à outil de taille en développante (14) destiné à l'écrouissage notamment d'éléments de pale (11) d'une zone de rotor (9) d'un moteur à réaction (1), comprenant un porte-outil (15) qui peut être relié à la broche porteuse (16) et auquel sont reliés à rotation deux corps de pince (17, 18), les corps de pince (17, 18) étant respectivement réalisés avec une zone de taille en développante (21, 22) et une distance entre les zones de taille en développante (21, 22) pouvant varier en fonction d'un mouvement de rotation des corps de pince (17, 18), un axe (39) de la broche porteuse (16), dans l'état relié au porte-outil (15), passant entre les zones de taille en développante (21, 22) à travers un point de contact entre les zones de taille en développante (21, 22) qui est présent dans le cas d'une distance entre les zones de taille en développante (21, 22) égale à zéro, les corps de pince (17, 18) étant réalisés de manière à pouvoir tourner par rapport au porte-outil (15) autour d'un palier de rotation (19) commun,
**caractérisée en ce que**
une distance entre les zones de taille en développante (21, 22) reste la même pendant un mouvement de rotation commun des corps de pince (17, 18) autour du palier de rotation (19) commun.

2. Machine-outil selon la revendication 1, **caractérisée en ce que** les corps de pince (17, 18) se trouvent en liaison fonctionnelle avec le porte-outil (15) par le biais d'éléments pistons (28, 29), au moyen desquels les corps de pince (17, 18) peuvent être tournés par rapport au porte-outil (15) autour d'un palier de rotation (19) dans une position nulle définie en référence au porte-outil (15).

3. Machine-outil selon la revendication 1 ou 2, **caractérisée en ce que** les corps de pince (17, 18) sont accouplés l'un à l'autre par le biais d'un dispositif d'entraînement (20) et la distance entre les zones de taille en développante (21, 22) peut être réduite en fonction d'un mouvement de rotation côté dispositif d'entraînement des corps de pince (17, 18) l'un vers l'autre.

4. Machine-outil selon la revendication 3, **caractérisée en ce que** le dispositif d'entraînement (20) est une unité piston-cylindre à simple effet.

5. Machine-outil selon l'une des revendications 3 ou 4, **caractérisée en ce qu'**une distance entre les zones de taille en développante (21, 22) peut être réduite jusqu'à une valeur limite définie par le biais du dispositif d'entraînement (20).

6. Machine-outil selon l'une des revendications 1 à 5, **caractérisée en ce qu'**un dispositif de rappel (32) est associé aux corps de pince (17, 18), par le biais duquel une distance entre les zones de taille en développante (21, 22) peut être modifiée en direction d'une valeur maximale par rotation côté dispositif de rappel des corps de pince (17, 18) l'un vers l'autre.

7. Machine-outil selon l'une des revendications 1 à 6, **caractérisée en ce que** les zones de taille en développante (21, 22) peuvent être reliées aux corps de pince (17, 18) par le biais d'éléments adaptateurs (37, 38) .

8. Machine-outil selon l'une des revendications 1 à 7, **caractérisée en ce que** les zones de taille en développante (21, 22) comportent respectivement un élément à bille (33, 34).
